# EUROPEAN PATENT APPLICATION

(11) **EP 2 407 938 A1**
(43) Date of publication of application: **18.01.2012**
(21) Application number: 11170312.0
(22) Date of filing: 17.06.2011
(51) Int. Cl.: G07D 11/00, G07F 19/00

(54) **Bill processing system and bill discriminating device**

(30) Priority: 02.07.2010 JP 2010151604
(71) Applicant: Hitachi-Omron Terminal Solutions, Corp., Shinagawa-ku Tokyo 141-8576 (JP)
(72) Inventor: Ogura, Koichi, Tokyo, 100-8220 (JP)
(74) Representative: MERH-IP Matias Erny Reichl Hoffmann

(57) **Abstract**

A bill processing system 100 includes an ATM 200 and a host computer 300 having a database. The ATM 200 transmits a feature quantity of the bill to the host computer 300 when reading the feature of the bill. The host computer 300 determines whether or not the bill is registered in the database when receiving the feature quantity of the bill. If the bill is registered in the database, the host computer 300 determines a discriminating value based on the feature quantity of the bill registered in the database and transmits the discriminating value to the ATM 200. The ATM 200 discriminates the authenticity of the bill using the discriminating value received from the host computer 300.

## Description

### Technical Field

The present invention relates to a bill discriminating device that discriminates authenticity of the bill, and a bill processing system equipped with the same.

### Background Art

A bill discriminating device including a sensor that reads a feature of the bill, and a discriminating unit that discriminates the authenticity of bills based on the feature of the bill read by the sensor is conventionally known. In such bill discriminating device, for example, a maximum value and a minimum value are set in advance as discriminating values which are reference values in discriminating the authenticity, and a range from the maximum value to the minimum value is set as a reference range. The discriminating unit discriminates that the bill is an authentic bill if the feature quantity of the bill is within the reference range, and discriminates that the bill is a counterfeit bill when the feature quantity of the bill is out of the reference range.

The above-mentioned reference range is set in consideration of dispersion in an output of the sensor, dispersion in a position of the bill at the time of reading, a secular change in the bill, and the like. If the reference range is extended, the possibility of false discrimination where a counterfeit bill is discriminated as an authentic bill becomes greater, which may cause damages to financial institutions. On the other hand, if the reference range is narrowed, the possibility of false discrimination where an authentic bill is discriminated as a counterfeit bill becomes greater and the return rate of the authentic bill increases, which may lower the convenience of user.

Various bill discriminating devices for realizing appropriate reference range are thus proposed in the related art (see e.g., patent literatures 1 to 5).

Patent literature 1 discloses a bill identifying device capable of suppressing the reference range from extending due to dispersion of a sensor by correcting an output signal of the sensor.

Patent literatures 2 and 3 disclose a bill transaction device in which a staff can adjust a reference range according to the transaction history.

Patent literatures 4 and 5 disclose a bill discriminating device in which a reference range is controlled according to the contents of transaction or the user.

### Citation List

### Patent Literature

[Patent literature 1] Japanese Laid-Open Patent Publication No. 2008-146123
[Patent literature 2] Japanese Laid-Open Patent Publication No. 2005-208955
[Patent literature 3] Japanese Laid-Open Patent Publication No. 2008-15813
[Patent literature 4] Japanese Laid-Open Patent Publication No. 2003-281603
[Patent literature 5] Japanese Laid-Open Patent Publication No. 2008-40637

### Summary of Invention

### Technical Problems

However, in the conventional devices disclosed in patent literatures 1 to 5, the dispersion of the bill itself (dispersion in printing, paper quality, etc. of the bill) needs to be taken into consideration, and hence the reference range needs to be extended a certain extent. Thus, the possibility of false discrimination where the counterfeit bill and a defected bill are discriminated as the authentic bill becomes greater, and therefore it is difficult to realize high discriminating accuracy.

In view of the above problems, it is an object of the present invention to provide a bill discriminating device and a bill processing system capable of carrying out highly accurate discrimination without being affected by the dispersion of the bill.

### Solution to Problems

A bill processing system of the present invention comprises a bill discriminating device including a reading unit that reads a feature of a bill and a discriminating unit that discriminates authenticity of the bill based on the feature read by the reading unit, and/or a bill information managing device including a storage unit that stores information of the bill and/or a control unit that controls the storage unit. The bill discriminating device includes a first communication unit for communicating with the bill information managing device. The bill information managing device includes a second communication unit for communicating with the bill discriminating device. The bill discriminating device transmits the feature of the bill from the first communication unit to the bill information managing device when the feature of the bill is read by the reading unit. The control unit of the bill information managing device determines whether or not the information of the bill is stored in the storage unit based on the feature of the bill when the feature of the bill is received by the second communication unit. When determining that the information of the bill is stored in the storage unit, the control unit determines a discriminating value based on the information of the bill stored in the storage unit, and the discriminating value is transmitted to the bill discriminating device from the second communication unit. The discriminating unit of the bill discriminating device discriminates the authenticity of the bill using the discriminating value when the discriminating value is received by the first communication unit.

According to such configuration, if the information of the bill is stored in the storage unit, the bill is uniquely specified, and the discriminating value corresponding to the feature of the bill is determined. Therefore, it is not necessary to set the broad reference range in consideration of the dispersion of the bill itself, and thus the counterfeit bill, the defected bill, and the like are less likely to be falsely discriminated as the authentic bill by setting the narrow reference range using the unique discriminating value determined according to the bill. The accuracy in discriminating the authenticity of the bill thus can be enhanced.

In the above-mentioned bill processing system, the control unit of the bill information managing device may update the information of the bill stored in the storage unit using the feature of the bill after determining the discriminating value based on the information of the bill stored in the storage unit.

In the above-mentioned bill processing system, the control unit of the bill information managing device may register the information of the bill in the storage unit using the feature of the bill when determining that the information of the bill is not stored in the storage unit.

In the above-mentioned bill processing system, the control unit of the bill information managing device may transmit the discriminating value set in advance from the second communication unit to the bill discriminating device when determining that the information of the bill is not stored in the storage unit.

In the above-mentioned bill processing system, the feature of the bill may include a serial number printed on the bill.

A bill discriminating device of the present invention includes a reading unit that reads a feature of a bill, a discriminating unit that discriminates authenticity of the bill based on the feature read by the reading unit, and/or a communication unit for communicating with a bill information managing device that stores information of the bill. The communication unit receives a discriminating value determined based on the information of the bill from the bill information managing device when the feature of the bill is read by the reading unit. The discriminating unit discriminates the authenticity of the bill using the discriminating value received by the communication unit.

In the above-mentioned bill discriminating device, the communication unit may transmit the feature of the bill to the bill information-managing device when the feature of the bill is read by the reading unit.

### Advantageous Effects of Invention

According to the present invention, the bill discriminating device and the bill processing system capable of carrying out highly accurate discrimination without being affected by the dispersion of the bill can be provided.

### Brief Description of Drawings

Fig. 1 is a block diagram showing a configuration of a bill processing system according to one embodiment of the present invention.
Fig. 2 is a view showing an outline of an ATM of Fig. 1.
Fig. 3 is a view describing a storage unit of a host computer of Fig. 1.
Fig. 4 is a view describing the storage unit of the host computer of Fig. 1.
Fig. 5 is a graph showing a frequency distribution of a feature quantity when an authentic bill is read.
Fig. 6 is a flowchart describing the operation at the time of deposit transaction of the ATM of Fig. 1.
Fig. 7 is a flowchart describing the operation at the time of deposit transaction of the host computer of Fig. 1.
Fig. 8 is a graph describing the calculated discriminating value.
Fig. 9 is a view describing a state in which the database is updated.
Fig. 10 is a view describing a state in which the bill is registered in the database.

### Description of Embodiments

One embodiment of the present invention will be hereinafter described with reference to the drawings.

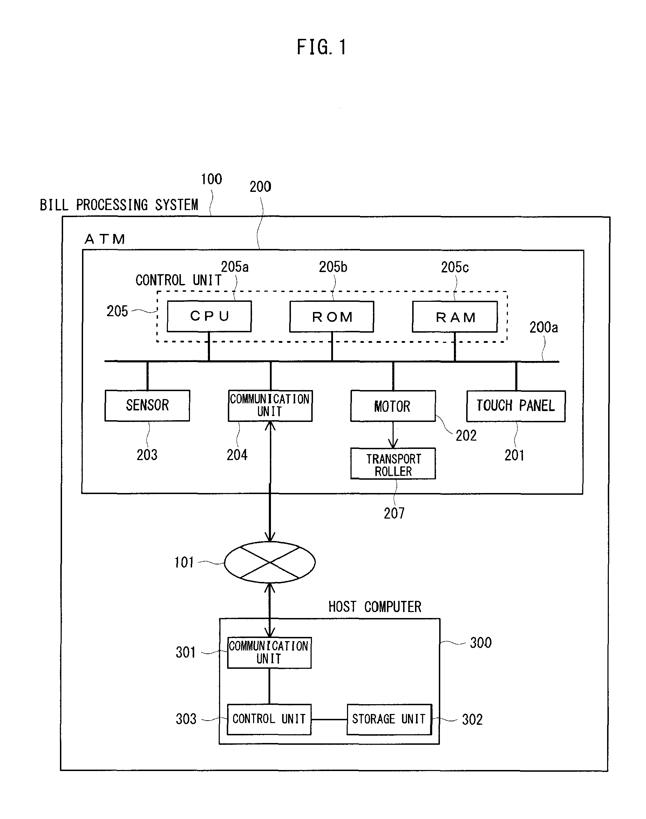

First, a configuration of a bill processing system 100 for bank bill (banknote) according to one embodiment of the present invention will be described with reference to Fig. 1 to Fig. 5.

As shown in Fig. 1, the bill processing system 100 includes an ATM (Automated Teller Machine) 200, and a host computer 300 to which the ATM 200 is connected through a network 101. In Fig. 1, only one ATM 200 is shown for simplification, but a plurality of ATMs 200 is actually connected to the host computer 300 through the network 101. The ATM 200 serves as a "bill discriminating device" of the present invention, and the host computer 300 serves as a "bill information managing device" of the present invention.

The ATM 200 is placed in financial institutions and the like to enable the user to carry out transactions such as depositing of bill. The ATM 200 includes a touch panel 201, a motor 202, a sensor 203, a communication unit 204, and a control unit 205, which are connected through a bus 200a. The sensor 203 serves as a "reading unit" of the present invention, the communication unit 204 serves as a "first communication unit" of the present invention, and the control unit 205 serves as a "discriminating unit" of the present invention.

The touch panel 201 includes a display section and an input section, and displays the contents of transaction and also receives instructions from the user. The motor 202 drives transport rollers 207 to be described later. The sensor 203 includes an optical sensor that uses visible light and ultraviolet light and a magnetic sensor to read features such as image data and magnetic data of the bill.

The communication unit 204 is arranged to communicate with the host computer 300 through the network 101. The control unit 205 includes a CPU 205a, a ROM 205b, and a RAM 205c and controls the operation of the ATM 200.

The CPU 205a carries out execution of programs stored in the ROM 205b, or the like to control the operation of the ATM 200. For instance, the CPU 205a calculates the feature quantity of the bill based on the detection result of the sensor 203 when the features of the bill are read by the sensor 203. The feature quantity of the bill is a value used to discriminate the denomination of bill and to discriminate the authenticity of bill, where multiple feature quantities are calculated for one bill. One example of the feature quantity of the bill is the concentration value of a predetermined area of the bill. The feature quantity of the bill also includes a serial number printed on the bill. The CPU 205a transmits the calculated feature quantity of the bill from the communication unit 204 to the host computer 300. The operation control by the CPU 205a will be described in detail later.

The ROM 205b is a nonvolatile memory such as a flash memory. The ROM 205b stores programs for controlling the operation of the ATM 200, set values of various types of setting items, and the like. For instance, the ROM 205b stores programs for discriminating the denomination of bill, and programs for discriminating the authenticity of the bill. The ROM 205b also stores a discriminating value for discriminating the denomination.

The RAM 205c is a volatile memory such as a DRAM. The RAM 205c temporarily stores data to be used in execution of the programs, and the like.

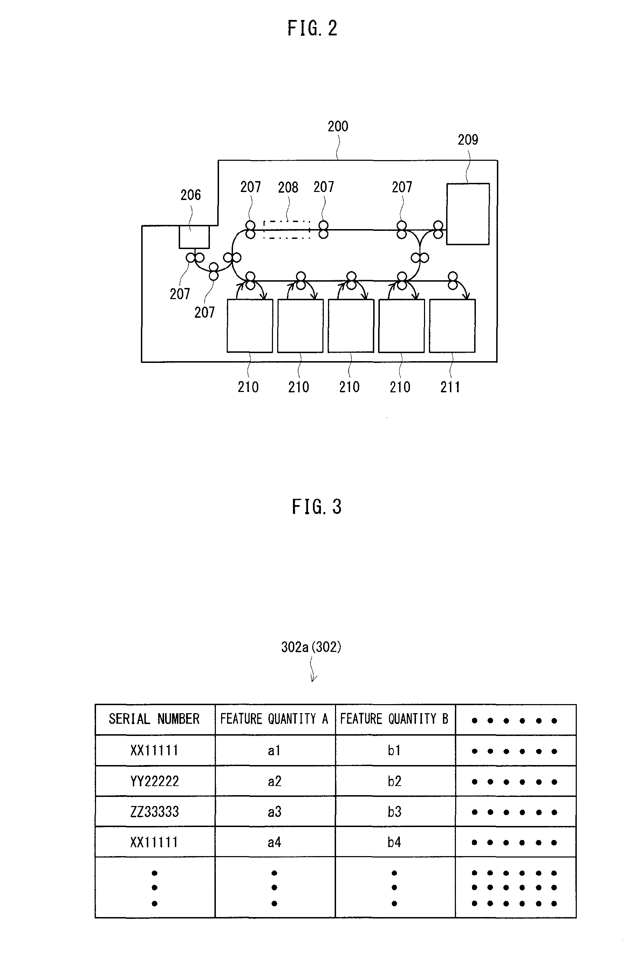

As shown in Fig. 2, the ATM 200 includes an accepting/dispensing slot 206, the transport roller 207, a validating section 208, a temporary holding section 209, a recycle repository 210, and a rejection repository 211.

The accepting/dispensing slot 206 is arranged to carry out exchange of bills with the user. The transport roller 207 is arranged in plurals to transport the bill. The validating section 208 includes the sensor 203 (see Fig. 1). The temporary holding section 209 temporarily holds the bill when carrying out exchange of bills with the user.

In a plurality of recycle repositories 210, the bill of a specific denomination is stored respectively. Each recycle repository 210 accommodates dispensable (reusable) bills. The rejection repository 211 accommodates non-reusable bills such as defected bills and counterfeit bills.

As shown in Fig. 1, the host computer 300 includes a communication unit 301, a storage unit 302, and a control unit 303. The communication unit 301 serves as a "second communication unit" of the present invention.

The communication unit 301 is arranged to communicate with the ATM 200 through the network 101. As shown in Fig. 3, the storage unit 302 stores the feature quantity (information) of the bill as a database (DB). In the database 302a of Fig. 3, a plurality of bills having the same serial number is registered. Generally, although the bills having the same serial number may circulate, such bills are different bills. Thus, with respect to the bills having the same serial number, the bill can be uniquely specified based on other feature quantities.

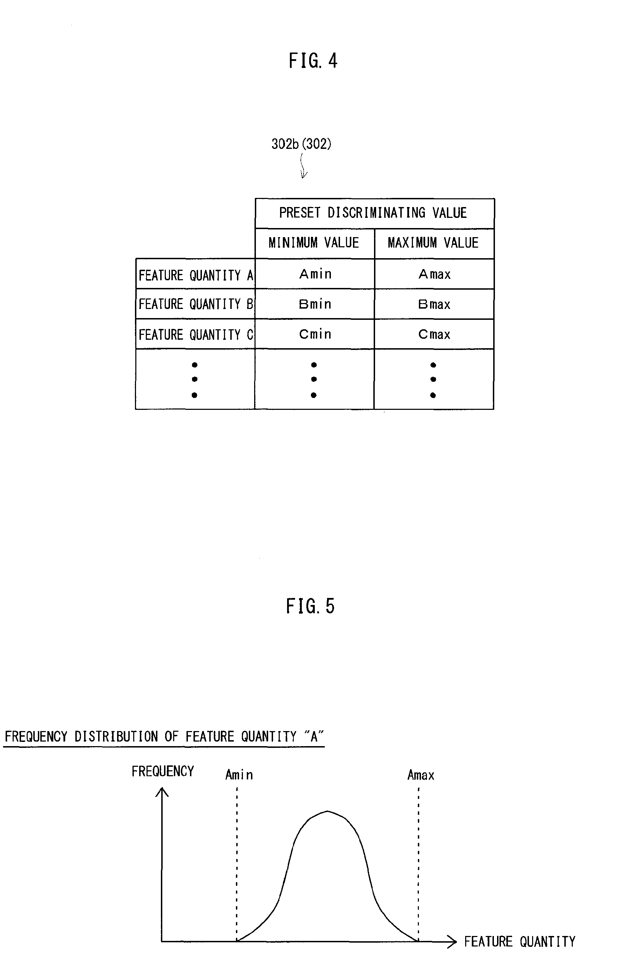

As shown in Fig. 4, the storage unit 302 stores a discriminating value 302b for discriminating the authenticity of the bill for every feature quantity of the bill. The discriminating value has, for example, a maximum value and a minimum value, and is set in advance based on the frequency distribution of the feature quantity calculated when the authentic bill is read by the sensor 203, as shown in Fig. 5. Amax in Fig. 5 is the maximum value of the discriminating value and Amin is the minimum value of the discriminating value. The range from Amax to Amin is the reference range described before. This reference range is set wide to a certain extent in consideration of the dispersion of the bill itself (dispersion in printing, paper quality, or the like of the bill). Similarly, the discriminating value is set in advance for other feature quantities such as "feature quantity B".

The control unit 303 includes a CPU, a ROM, and a RAM, and controls the operation of the host computer 300. For instance, the control unit 303 calculates a discriminating value for discriminating the authenticity of bills based on the feature quantity of the bill stored in the storage unit 302. The operation control by the control unit 303 will be described in detail later.

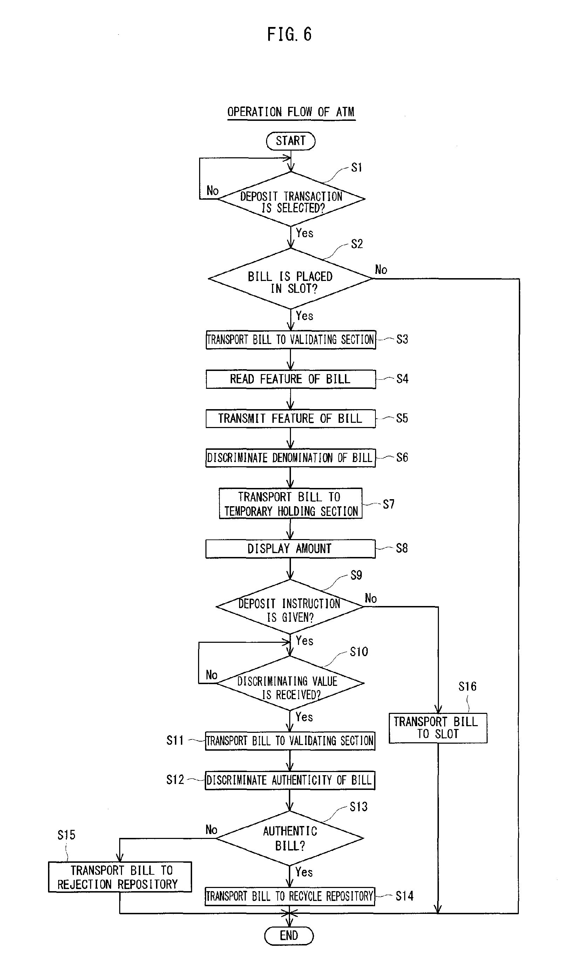

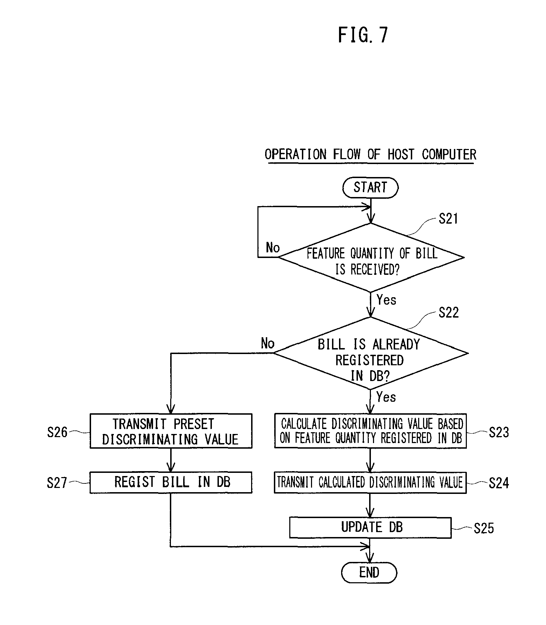

The operation at the time of deposit transaction of the bill processing system 100 according to one embodiment of the present invention will now be described with reference to Fig. 1 to Fig. 10. Each step in the flowchart of Fig. 6 is executed by the control unit 205 (see Fig. 1) of the ATM 200. Each step in the flowchart of Fig. 7 is executed by the control unit 303 (see Fig. 1) of the host computer 300.

First, in step S1 of Fig. 6, whether or not deposit transaction is selected among the various transactions displayed on the touch panel 201 (see Fig. 1) is determined at the ATM 200. If determined that the deposit transaction is not selected, step S1 is repeatedly carried out. In other words, the ATM 200 waits until the deposit transaction is selected. If determined that the deposit transaction is selected, the process proceeds to step S2.

In step S2, whether or not the bill is placed in the accepting/dispensing slot 206 (see Fig. 2) within a predetermined period is determined. This determination is performed based on the detection result of the sensor (not illustrated). If determined that the bill is not placed even after elapse of the predetermined period, the deposit transaction is canceled. If determined that the bill is placed within the predetermined period, the process proceeds to step S3.

In step S3, the transport rollers 207 (see Fig. 2) are rotated when the motor 202 (see Fig. 1) is driven, so that the bill placed in the accepting/dispensing slot 206 is transported to the validating section 208 (see Fig. 2). If the plurality of bills is placed in the accepting/dispensing slot 206, the bills are transported to the validating section 208 in order.

In step S4, the features of the bill being transported are read by the sensor 203 (see Fig. 1) arranged in the validating section 208. The CPU 205a (see Fig. 1) then calculates the feature quantity of the bill based on the detection result of the sensor 203. The calculated feature quantity of the bill is stored in the RAM 205c.

In step S5, the calculated feature quantity of the bill is transmitted from the communication unit 204 (see Fig. 1) to the host computer 300 through the network 101 (see Fig. 1).

In step S21 of Fig. 7, whether or not the feature quantity of the bill transmitted from the ATM 200 is received by the communication unit 301 (see Fig. 1) is determined at the host computer 300. If determined that the feature quantity of the bill is not received, step S21 is repeatedly carried out. In other words, the host computer 300 waits until receiving the feature quantity of the bill. The process proceeds to step S22 if determined that the feature quantity of the bill is received.

In step S22, whether or not the bill read by the sensor 203 (bill with feature quantity being received) is already registered in the database 302a (see Fig. 3) of the storage unit 302 is determined. This determination is performed based on the received feature quantity of the bill (serial number and other feature quantities). Even if the received feature quantity of the bill has been changed from the feature quantity registered in the database 302a due to a secular change, whether or not the bill is registered in the database 302a can be determined by comprehensively determining a plurality of feature quantities. When determined that the bill is registered in the database 302a, the process proceeds to step S23. If determined that the bill is not registered in the database 302a, the process proceeds to step S26.

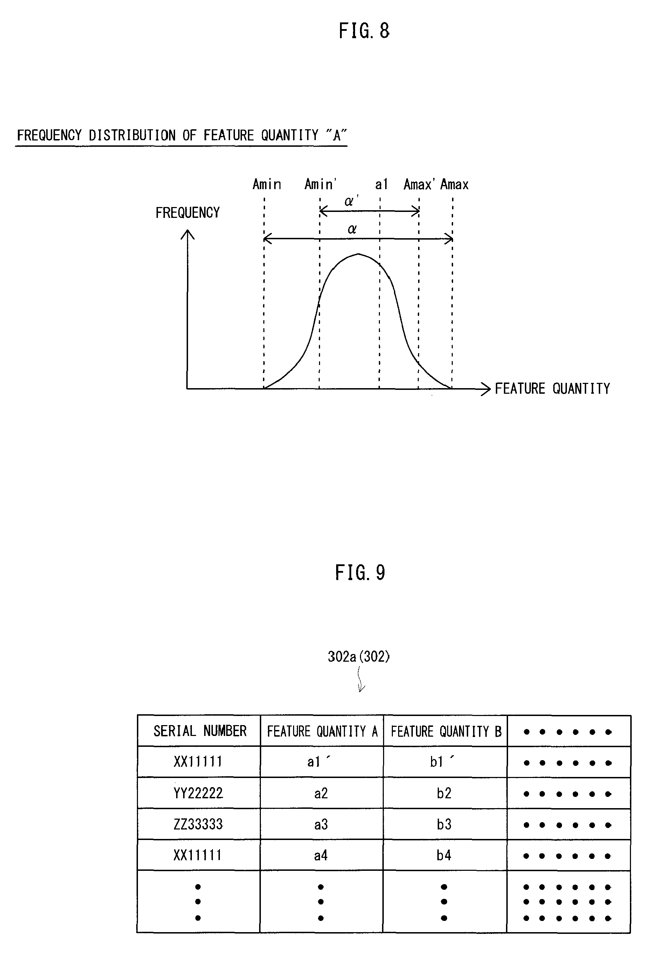

In the case where the bill is registered in the database 302a, the discriminating value for discriminating the authenticity is calculated based on the feature quantity registered in the database 302a in step S23. For instance, in fig. 3, if the bill with the feature quantity being received is the bill at the top of the database 302a, the discriminating value for "feature quantity A" is calculated based on "a1". Specifically, as shown in Fig. 8, the maximum value Amax' and the minimum value Amin' of the discriminating value corresponding to "a1" are calculated so that the reference range α' becomes smaller than the preset reference range α. With respect to other feature quantities such as "feature quantity B" as well, the discriminating value is similarly calculated so that the reference range becomes smaller than the preset reference range based on the value registered in the database 302a.

In step S24, the calculated discriminating value (maximum value and minimum value) is transmitted from the communication unit 301 to the ATM 200 through the network 101. Thereafter, the database 302a is updated in step S25. For instance, in Fig. 3, in the case where the bill with the feature quantity being received is the bill at the top of the database 302a, if the value of the received "feature quantity A" is "a1"', the value of the "feature quantity A" is updated from "a1" to "a1"' as shown in Fig. 9. Other feature quantities such as "feature quantity B" are similarly updated.

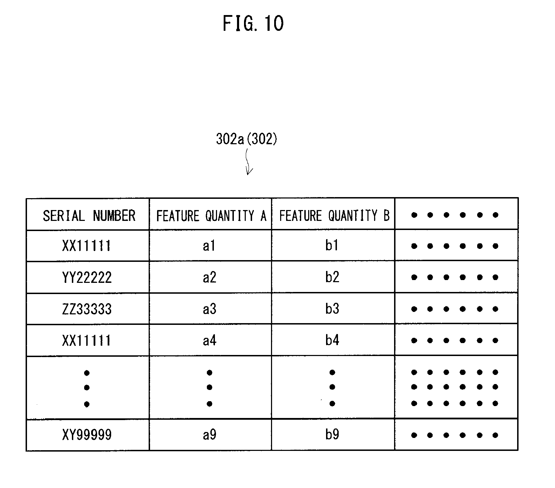

On the other hand, in the case where the bill is not registered in the database 302a, the preset discriminating value (see Fig. 4) is transmitted from the communication unit 301 to the ATM 200 through the network 101 in step S26. Thereafter, the bill with the feature quantity being received is registered in the database 302a in step S27. For instance, if the serial number is "XY99999", the bill is newly registered as shown in Fig. 10.

In the ATM 200, in step S6 of Fig. 6, the denomination of bill is discriminated based on the feature quantity of the bill calculated in step S4. The discrimination of the denomination is carried out using the discriminating value for discriminating the denomination stored in the ROM 205b by executing the program for discriminating the denomination stored in the ROM 205b (see Fig. 1).

In step S7, the transport rollers 207 are rotated by driving the motor 202, so that the bill is transported from the validating section 208 to the temporary holding section 209 (see Fig. 2). Thereafter, an amount of bill placed in the accepting/dispensing slot 206 is displayed on the touch panel 201 in step S8.

In step S9, whether or not the deposit instruction is given is determined. Specifically, a deposit confirmation button is displayed on the touch panel 201, and whether or not the deposit confirmation button is pushed is determined. If determined that the deposit instruction is given, the process proceeds to step S10. If determined that the deposit instruction is not given, the bill is transported from the temporary holding section 209 to the accepting/dispensing slot 206 in step S16. The bill is thereby returned to the user and the deposit transaction is cancelled.

In step S10, whether or not the discriminating value transmitted from the host computer 300 is received by the communication unit 204 is determined. If determined that the discriminating value is not received, step S10 is repeatedly carried out. If determined that the discriminating value is received, the process proceeds to step S11.

In step S11, the motor 202 is driven so that the transport rollers 207 are rotated and the bill is transported from the temporary holding section 209 to the validating section 208.

In step S12, the authenticity of the bill transported to the validating section 208 is discriminated. Specifically, the features of the bill being transported are read by the sensor 203 arranged in the validating section 208. The feature quantity of the bill is then calculated by the CPU 205a based on the detection result of the sensor 203. Thereafter, whether the calculated feature quantity is within a range of the received discriminating value (reference range) is determined by the CPU 205a.

For instance, in the case where the bill is registered in the database 302a, if the received discriminating value has a maximum value Amax' and a minimum value Amin' (see Fig. 8) with respect to the "feature quantity A", it is determined that the bill is an authentic bill as to the "feature quantity A" provided that the calculated value of the feature quantity is within the range of α'. On the other hand, in the case where the bill is not registered in the database 302a, if the received discriminating value has a maximum value Amax and a minimum value Amin (see Fig. 8) with respect to the "feature quantity A", it is determined that the bill is an authentic bill as to the "feature quantity A" provided that the calculated value of the feature quantity is within the range of α. Similarly, whether or not the calculated feature quantity is within the range of the received discriminating value is determined for other feature quantities such as the "feature quantity B". The authenticity of the bill is discriminated by comprehensively determining these results.

In step S13, whether or not the bill is an authentic bill is determined. If determined that the bill is an authentic bill, the bill is transported from the validating section 208 to the recycle repository 210 in step S14. The recycle repository 210 to which the bill is transported is selected according to the denomination of bill. On the other hand, if determined that the bill is not an authentic bill, the bill is transported from the validating section 208 to the rejection repository 211 in step S15.

In the present embodiment, as described above, if the bill is registered in the database 302a, the reference range (α' of Fig. 8) can be narrower than the reference range (α of Fig. 8) to be set in advance in consideration of the dispersion of the bill itself, by specifying the bill uniquely and calculating the discriminating value corresponding to the feature quantity of the bill. Therefore, a counterfeit bill and a defected bill are less likely to be falsely discriminated as an authentic bill by discriminating the authenticity with the unique discriminating values (Amax' and Amin' in Fig. 8) calculated according to the bill. The authenticity of the bill thus can be accurately discriminated without being affected by the dispersion of the bills, and the discrimination accuracy can be enhanced.

In the present embodiment, in the case where the bill is registered in the database 302a, even if the features of the bill change due to, for example, a secular change in the bill, an appropriate discriminating value can be calculated by updating the feature quantity of the bill when the feature quantity of the bill is received.

In the present embodiment, even if the bill is not registered in the database 302a, the authenticity of the bill can be discriminated by using the discriminating value set in advance.

In the present embodiment, in the case where the bill is not registered in the database 302a, the feature quantity of the bill is registered when the feature quantity of the bill is received, and thus the discriminating value corresponding to the feature quantity of the bill can be calculated in the subsequent time or later.

In the present embodiment, the host computer 300 includes the database 302a. Hence, the ATM 200 does not need to include the database 302a, and an accurate discrimination can be carried out even if the bill is used in different ATMs 200.

The present invention may adopt various embodiments other than the above. For instance, in the above embodiment, the present invention is applied to the bill processing system 100 for bank bill (banknote). However, the present invention is not limited thereto, and may be applied to a bill processing system for other bills such as securities.

In the above embodiment, the authenticity discrimination applied with the present invention is carried out in the depositing transaction. However, the present invention is not limited thereto. The authenticity discrimination applied with the present invention may be carried out in the withdrawing transaction or loading of bills.

In the above embodiment, the ROM 205b may store the discriminating value set in advance for authenticity discrimination, and the authenticity of the bill may be discriminated when discriminating the denomination of bill (step S6). In this case, if determined that the bill is not an authentic bill, the bill may be transported to the rejection repository 211 or the accepting/dispensing slot 206.

In the above embodiment, an example in which the discriminating value set in advance is transmitted from the communication unit 301 to the ATM 200 in the case where the bill is not registered in the database 302a has been described. Alternatively, the discriminating value set in advance may be stored in the ROM 205b of the ATM 200, and the host computer 300 may instruct the ATM 200 to carry out the authenticity discrimination using the discriminating value stored in the ROM 205b in the case where the bill is not registered in the database 302a.

In the above described embodiment, the feature of the bill is again read with the sensor 203 and the feature quantity of the bill is calculated with the CPU 205a when discriminating the authenticity of the bill transported to the validating section 208 (step S12). Alternatively, the authenticity may be discriminated by using the feature quantity stored in the RAM 205c in step S4.

In the above embodiment, the bill is transported to the rejection repository 211 (step S15) when determined that the bill is not an authentic bill. Alternatively, the bill may be transported to the accepting/dispensing slot 206 to return the bill to the user when determined that the bill is not an authentic bill.

In the above embodiment, the information for identifying the ATM 200 accommodating the bills may be stored together with the feature quantity of the bill in the storage unit 302 of the host computer 300. With such configuration, it is possible to manage in which ATM 200 the bill is stored.

In the above embodiment, the maximum value and the minimum value are illustrated as the discriminating value, but the present invention is not limited thereto. The discriminating value may be one threshold value or may be three or more threshold values. For instance, the bill may be determined as an authentic bill if the value of the calculated feature quantity is between a first threshold value and a second threshold value, and the bill may be determined as a counterfeit bill if the value of the calculated feature quantity is between a third threshold value and a fourth threshold value.

In the above embodiment, the bill is read by the ATM 200, and the bill is registered in the database 302a in the case where the bill is not registered in the database 302a of the host computer 300. Alternatively, the bill may be registered in the database 302a before being circulated.

It should be understood that although the foregoing description has been made on preferred embodiments, the invention is not limited thereto and further various changes and modifications, for example, by combining features of the above-described embodiments, may be made without departing from the spirit of the invention and the scope of the appended claims. Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

### Reference Signs List

- 100: bill processing system
- 200: ATM (bill discriminating device)
- 203: sensor (reading unit)
- 204: communication unit (first communication unit)
- 205: control unit (discriminating unit)
- 300: host computer (bill information managing device)
- 301: communication unit (second communication unit)
- 302: storage unit
- 303: control unit

## Claims

1. A bill processing system (100) comprising:
a bill discriminating device (200) including a reading unit (203) that reads a feature of a bill and a discriminating unit (205) that discriminates authenticity of the bill based on the feature read by the reading unit (203); and
a bill information managing device (300) including a storage unit (302) that stores information of the bill and a control unit (303) that controls the storage unit (302), **characterized in that**
the bill discriminating device (200) includes a first communication unit (204) for communicating with the bill information managing device (300),
the bill information managing device (300) includes a second communication unit (301) for communicating with the bill discriminating device (200),
the bill discriminating device (200) transmits the feature of the bill from the first communication unit (204) to the bill information managing device (300) when the feature of the bill is read by the reading unit (203),
the control unit (303) of the bill information managing device (300) determines whether or not the information of the bill is stored in the storage unit (302) based on the feature of the bill when the feature of the bill is received by the second communication unit (301),
when determining that the information of the bill is stored in the storage unit (302), the control unit (303) determines a discriminating value based on the information of the bill stored in the storage unit (302), and the discriminating value is transmitted to the bill discriminating device (200) from the second communication unit (301),
the discriminating unit (205) of the bill discriminating device (200) discriminates the authenticity of the bill using the discriminating value when the discriminating value is received by the first communication unit (204).

2. A bill processing system according to claim 1, wherein
the control unit (303) of the bill information managing device (300) updates the information of the bill stored in the storage unit (302) using the feature of the bill after determining the discriminating value based on the information of the bill stored in the storage unit (302).

3. A bill processing system according to claim 1 or claim 2, wherein
the control unit (303) of the bill information managing device (300) registers the information of the bill in the storage unit (302) using the feature of the bill when determining that the information of the bill is not stored in the storage unit (302).

4. A bill processing system according to any one of claims 1 to 3, wherein
the control unit (303) of the bill information managing device (300) transmits the discriminating value set in advance from the second communication unit (301) to the bill discriminating device (200) when determining that the information of the bill is not stored in the storage unit (302).

5. A bill processing system according to any one of claims 1 to 4, wherein
the feature of the bill includes a serial number printed on the bill.

6. A bill discriminating device (200) comprising:
a reading unit (203) that reads a feature of a bill;
a discriminating unit (205) that discriminates authenticity of the bill based on the feature read by the reading unit (203); and
a communication unit (204) for communicating with a bill information managing device (300) that stores information of the bill, **characterized in that**
the communication unit (204) receives a discriminating value determined based on the information of the bill from the bill information managing device (300) when the feature of the bill is read by the reading unit (203),
the discriminating unit (205) discriminates the authenticity of the bill using the discriminating value received by the communication unit (204).

7. A bill discriminating device according to claim 6, wherein
the communication unit (204) transmits the feature of the bill to the bill information managing device (300) when the feature of the bill is read by the reading unit (203).
